(19) Europäisches Patentamt
European Patent Office
Office européen des brevets

(11) Veröffentlichungsnummer: **0 045 994**
**B1**

(12) # EUROPÄISCHE PATENTSCHRIFT

(45) Veröffentlichungstag der Patentschrift: **23.10.85**

(51) Int. Cl.⁴: **C 08 G 18/80**, C 08 G 18/79, C 09 D 3/72, C 08 G 18/75

(21) Anmeldenummer: **81200890.2**

(22) Anmeldetag: **10.08.81**

(54) **Verfahren zur Herstellung von blockierungsmittelfreien Polyurethan-Pulverlacken mit hoher Lagerstabilität, die oberhalb 120 Grad C härtbar sind sowie die danach hergestellten Polyurethan-Pulverlacke.**

(30) Priorität: **13.08.80 DE 3030588**

(43) Veröffentlichungstag der Anmeldung:
**17.02.82 Patentblatt 82/7**

(45) Bekanntmachung des Hinweises auf die Patenterteilung:
**23.10.85 Patentblatt 85/43**

(84) Benannte Vertragsstaaten:
**BE CH DE FR GB IT LI LU NL SE**

(56) Entgegenhaltungen:
**FR - A - 2 221 481**
**FR - A - 2 268 840**

**Die Akte enthält technische Angaben, die nach dem Eingang der Anmeldung eingereicht wurden und die nicht in dieser Patentschrift enthalten sind.**

(73) Patentinhaber: **CHEMISCHE WERKE HÜLS AG, Postfach 1320, D-4370 Marl 1 (DE)**

(72) Erfinder: **Disteldorf, Josef, Dr., Am Sengenhoff 2a, D-4690 Herne 1 (DE)**
Erfinder: **Gras, Rainer, Dr., An der Ziegelei 91, D-4690 Herne 2 (DE)**
Erfinder: **Schnurbusch, Horst, Dr., Overwegstrasse 36, D-4690 Herne 1 (DE)**

(74) Vertreter: **Steil, Hanna, Dipl.-Chem., RSP PATENTE - PB 15 Postfach 1320, D-4370 Marl 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 045 994 B1

BUNDESDRUCKEREI BERLIN

**Beschreibung**

Die vorliegende Erfindung betrifft ein Verfahren zur Herstellung von blockierungsmittelfreien Polyurethan-Pulverlacken mit ausgezeichneter Lagerstabilität, die oberhalb 120°C zu harten, elastischen, schlagzähen und wetterstabilen Lackfilmen aushärten, sowie die danach hergestellten Polyurethan-Pulverlacke.

Bereits in der DE-OS 2 420 475 werden Polyurethan-Pulverlacke beschrieben, die durch Reaktion Uretdiongruppen aufweisender Polyisocyanate mit Polyolen hergestellt werden. Allerdings beschränken sich die Beispiele ausschließlich auf Uretdion-Toluylendiisocyanat und Uretdion-Hexamethylendiisocyanat. Außerdem ist es hier notwendig, durch monofunktionelle Reaktionspartner den höherfunktionellen Anteil der Vernetzer zu kompensieren, d. h. daß die Uretdion/Isocyanurat-Gemische zunächst linearisiert werden müssen.

Gemäß DE-OS 2 502 934 ist es bekannt, Polyurethan-Pulverlacke herzustellen, indem latente, gleichzeitig Uretdiongruppen und mit Blockierungsmittel blockierte Isocyanatgruppen enthaltende Polyisocyanate mit Polyolen gehärtet werden. Aufgrund der verwendeten Blockierungsmittel treten während der Härtung nach wie vor mehr oder minder große Umweltbelästigungen auf. Außerdem spielt in diesem Fall die Funktionalität der Vernetzerkomponente keine Rolle bei der Lackaufbereitung.

Mit den zum Stand der Technik zählenden Dimerisierungskatalysatoren (tert. Phosphine) war es bis jetzt nicht möglich, ein isocyanuratfreies Uretdion des Isophorondiisocyanat (IPDI) herzustellen.

Ein nach DE-OS 1 670 720 bzw. DE-OS 1 934 763 hergestelltes Uretdion-Isophorondiisocyanat enthält je nach Reaktionsbedingungen noch ca. 20—40 Gew.-% des trimeren IPDI (Isocyanurat-Isophorondiisocyanat).

Es ist daher nicht überraschend, daß bisher keine blockierungsmittelfreien Polyurethan-Pulverlacke bekannt sind, die aus linearen Uretdiongruppen aufweisenden Isophorondiisocyanat-Polyadditionsprodukten mit endständigen unblockierten NCO-Gruppen und Polyolen aufgebaut sind, da die Voraussetzung für die Herstellung der genannten Uretdiongruppen aufweisenden Polyadditionsverbindungen darin besteht, daß das zur Kettenverlängerung mit Diolen eingesetzte Uretdion-Diisocyanat eine NCO-Funktionalität von 2 besitzt. Bei einer NCO-Funktionalität des Uretdion-Diisocyanats von $>2$ muß bei dessen Umsetzung mit Diolen bereits mit zumindest teilweiser Gelierung gerechnet werden.

Für eine gezielte Weiterreaktion mit Diolen zur Herstellung von wertvollen Ausgangsverbindungen für die Polyurethanchemie (Bindemittelkomponente von blockierungsmittelfreien PUR-Pulvern) kommt das bekannte isocyanathaltige Uretdion-Isophorondiisocyanat nicht in Frage.

Die Herstellung der erfindungsgemäßen blockierungsmittelfreien Polyurethan-Pulverlacke wurde erst dadurch möglich, daß es gelang, einen Katalysator für die Dimerisierung von IPDI zu finden, der die Herstellung eines praktisch isocyanuratfreien Uretdion-Isophorondiisocyanat, welches in der Hitze zu über 98% wieder in IPDI rückspaltbar ist, gestattet.

Die Herstellung dieses uretdionhaltigen Isophorondiisocyanats ist nicht Gegenstand dieser Patentanmeldung. Sie erfolgt dadurch, daß man Isophorondiisocyanat gegebenenfalls in einem inerten organischen Lösungsmittel mit Hilfe eines Katalysators der allgemeinen Formel

$$X_mP(NR_2)_{3-m}$$

wobei

m = 0, 1, 2
X = Cl, OR, R
R = gleiche oder verschiedene Alkyl-, Aralkyl-, gegebenenfalls alkylsubstituierte Cycloalkylreste und 2 (R — 1 H) Bestandteile eines gemeinsamen Ringes bedeuten

bei Temperaturen von 0—80°C, vorzugsweise 10—30°C dimerisiert, und das gebildete 1,3-Diazacyclobutandion-2,4 nach einem Umsatz von 5—70, vorzugsweise 20—50%, ohne vorgehende Desaktivierung des Katalysators aus dem Reaktionsgemisch durch Dünnschichtdestillation als Rückstand sowie Katalysator und Monomeres als Destillat isoliert.

Aus diesem reinen uretdionhaltigen Isophorondiisocyanat erfolgt mit Diolen die Polyadduktbildung, die hier ebenfalls nicht beansprucht wird.

Außerdem wurde die Herstellung der erfindungsgemäßen blockierungsmittelfreien Polyurethan-Pulverlacke auch erst dadurch möglich, daß es gelang, Polyhydroxylverbindungen herzustellen, die aufgrund ihrer physikalischen und chemischen Kenndaten eine Gelierung verhindern und durch die niedrige Schmelzviskosität einen guten Verlauf der Lackfilme garantieren.

Es wurde also nun gefunden, daß man äußerst hochwertige Polyurethan-Pulverlacke dann erhält, wenn man als Vernetzer bestimmte, isocyanuratfreie, uretdiongruppenhaltige Isophorondiisocyanat-Polyadditionsaddukte in Verbindung mit Polyhydroxylverbindungen niedriger Schmelzviskosität und limitierter OH-Funktionalität einsetzt, die im wesentlichen frei von unter Einbrennbedingungen abspaltbaren flüchtigen Isocyanat-Blockierungsmitteln sind. Diese erfindungsgemäßen Überzugsmittel besitzen zudem den Vorzug, auch in hohen Schichtdicken Lackierungen zu ergeben, ohne daß Filmstörungen, wie Blasen- und Nadelstichbildungen auftreten.

Die Tatsache, daß während des Härtungsprozesses keine Blockierungmittel frei werden, stellt einen sehr großen Vorteil dar. Die physiologischen Reizungen des Arbeitspersonals werden vermieden, auf Vorrichtungen zur Beseitigung von Geruchsbelästigungen kann verzichtet werden, das Umweltproblem ist damit nahezu unterbunden und außerdem ist der ökonomische Gesichtspunkt nicht zu vernachlässigen, nämlich insofern, als alle eingesetzten Komponenten vollständig im Lackfilm eingebaut werden.

Gegenstand der vorliegenden Erfindung ist daher ein Verfahren zur Herstellung von blockierungsmittelfreien Polyurethan-Pulverlacken mit hoher Lagerstabilität, die oberhalb 120°C härtbar sind, auf Basis von linearen, Uretdiongruppen aufweisenden Polyisocyanat-Additionsprodukten mit endständig unblockierten NCO-Gruppen und Polyolen, dadurch gekennzeichnet, daß

a. lineare Uretdiongruppen aufweisende, endständig unblockierte Isophorondiisocyanat-Diol-Polyadditions-Produkte, deren Uretdiongruppen in der Hitze zu >98% in die entsprechenden Isocyanate rückspaltbar sind, der folgenden Formel

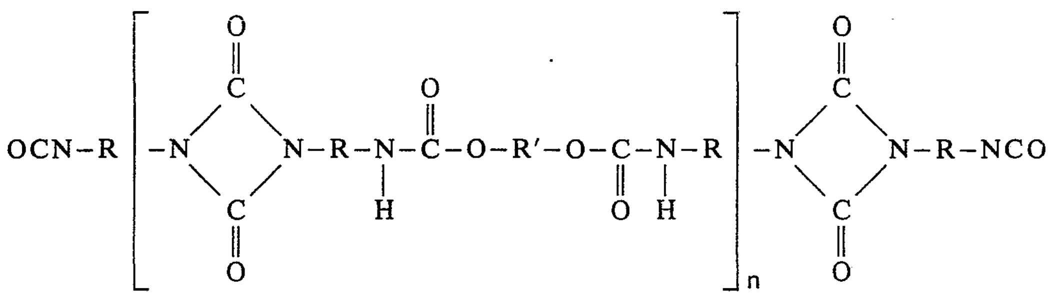

worin

R = 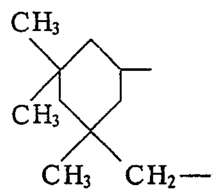 n ≧ 1 und

R' = zweiwertiger, aliphatischer, cycloaliphatischer, araliphatischer oder aromatischer Kohlenwasserstoffrest des Diols bedeuten,

mit einem NCO/OH-Verhältnis von 1 : 0,5 bis 1 : 0,9, insbesondere 1 : 0,6 bis 1 : 0,8, einem Uretdion/Diol-Molverhältnis 2 : 1 bis 6 : 5, vorzugsweise 3 : 2 bis 5 : 4, einem Gehalt an freiem Isocyanat bis 8 Gew.-% und vorzugsweise <5 Gew.-%, Molekulargewichten zwischen 500 und 4000, vorzugsweise zwischen 1450 und 2800 und Schmelzpunkten ≧70°C bis ≦130°C, vorzugsweise 85°C bis 120°C,

mit

b. Polyhydroxylverbindungen mit einer OH-Funktionalität von ≧2,2 bis ≦3,5, vorzugsweise 2,5 bis 3,4, einem mittleren Molekulargewicht von 2000—4500, vorzugsweise 2300—3900, einer OH-Zahl von 30 bis 100 mg KOH/g, vorzugsweise 40—80 mg KOH/g, einer Viskosität von <80 000 mPa · s, vorzugsweise <30 000 mPa · s bei 160°C und Schmelzpunkten zwischen ≧65°C und ≦120°C, vorzugsweise 75°C—100°C,

und mit

c. in der Polyurethanchemie üblichen Additiven umgesetzt werden, wobei das Mengenverhältnis von a. und b. so gewählt wird, daß das NCO/OH-Verhältnis zwischen 0,8 : 1 bis 1,2 : 1 liegt.

Zu den üblichen Additiven gehören beschleunigende Katalysatoren, Pigmente, Farbstoffe und Füllstoffe. Die Katalysatoren werden in Mengen von 0,05—1,5 Gew.-%, vorzugsweise 0,1—0,5 Gew.-%, zugesetzt. Der Füllgrad ist hoch, er kann bis zu 60 Gew.-%, vorzugsweise bis 50 Gew.-%, liegen.

Weiterer Gegenstand der Erfindung sind die wie beansprucht hergestellten Polyurethan-Pulverlacke.

Ein Uretdion des IPDI mit hohem Reinheitsgehalt wird erhalten, wenn man IPDI gegebenenfalls in einem inerten organischen Lösungsmittel in Anwesenheit bestimmter Katalysatoren bei Temperaturen von 0—80°C, vorzugsweise 10—30°C dimerisiert, wobei man ohne vorherige Desaktivierung des Katalysators bei einem Umsatz von 5—70%, vorzugsweise 40—60%, das gebildete Uretdion-Isophorondiisocyanat aus dem Reaktionsgemisch durch Dünnschichtdestillation als Rückstand sowie Katalysator und Monomeres im Destillat isoliert.

Bei den Katalysatoren handelt es sich um Verbindungen der Formel

$X_mP(NR_2)_{3-m}$,

deren Bedeutung bereits vorstehend erklärt wurde.

Das isocyanuratfreie Uretdion des Isophorondiisocyanats ist bei Raumtemperatur hochviskos (>$10^6$ mPa · s; bei 60°C/13 · $10^3$ mPa · s, bei 80°C 1,4 · $10^3$ mPa · s). Sein NCO-Gehalt liegt im Bereich von 16,8—18% NCO; d. h. daß mehr oder minder hohe Anteile an Polyuretdion des IPDI im Reaktionsprodukt vorliegen müssen. Der Monomergehalt liegt bei <1%. Der NCO-Gehalt des Reaktionsproduktes nach dem Erhitzen auf 180—200°C beträgt 37,1—37,7% NCO.

Das isocyanuratfreie Uretdion-Isophorondiisocyanat wird mit Diolen in einem NCO/OH-Verhältnis von 1 : 0,5 bis 1 : 0,9, vorzugsweise 1 : 0,6—1 : 0,8, zu dem Polyadditionsprodukt umgesetzt. Man kann dabei so arbeiten, daß das Glykol in einem Guß oder durch allmähliches Eintragen in das Uretdion-Isophorondiisocyanat zugefügt wird.

Beispiele derartiger Diole sind Ethylenglykol, Propylen-(1,2) und -(1,3)-glykol, 2-Ethyl-hexandiol-(1,3), Hexandiol-(1,6), Oktandiol-(1,8), Neopentylglykol, 1,4-Bishydroxymethylcyclohexan, 3(4), 8(9)-Bishydroxy-methyltricyclodecan, 2-Methylpropandiol-(1,3), 3-Methylpentandiol-(1,5), ferner Diethylenglykol, Triethylenglykol, Tetraethylenglykol, Dipropylenglykol und Dibutylenglykol. Bevorzugt findet Butylendiol-(1,4) als verknüpfendes Diol zum Aufbau Verwendung.

Zur Herstellung des Polyadditionsproduktes werden die Reaktionspartner in den angegebenen Mengenverhältnissen gemischt. Im allgemeinen wird die uretdionhaltige Isocyanatkomponente vorgelegt und das Diol zugegeben. Die Reaktion kann in Substanz oder auch in Gegenwart geeigneter Lösungsmittel durchgeführt werden. Geeignete Lösungsmittel sind z. B. Benzol, Toluol, Methyl- bzw. Ethylglykolacetat, Dimethylformamid, Xylol und andere aromatische oder aliphatische Kohlenwasserstoffe; auch Ketone, wie Aceton, Methylbutylketon, Methylisobutylketon, Cyclohexanon und chlorierte aromatische und aliphatische Kohlenwasserstoffe sowie beliebige Gemische dieser und anderer inerter Lösungsmittel. Die Umsetzung wird im allgemeinen bei Temperaturen von 50—120°C, vorzugsweise 60—90°C, durchgeführt. Die Reaktionskomponenten werden so lange bei den angegebenen Temperaturen erhitzt, bis alle OH-Gruppen unter Bildung von Urethangruppen umgesetzt sind. Dies dauert je nach Reaktionstemperatur 0,5—4 h. Es können auch die Isocyanat-Polyaddition beschleunigenden Katalysatoren mitverwendet werden, wobei bevorzugt organische Zinnverbindungen, wie Zinn-II-acetat, Zinn-II-octoat, Zinn-II-laurat, Dibutyl-zinndiacetat, Dibutylzinn-dilaurat, Dibutyl-zinnmaleat oder Dioctylzinndiacetat als Katalysatoren Verwendung finden. Die Katalysatoren werden im allgemeinen in einer Menge zwischen 0,01 und 0,5 Gew.-%, bezogen auf die Gesamtmenge der eingesetzten Reaktanten, eingesetzt.

Die Aufarbeitung der Reaktionsansätze erfolgt in der Regel so, daß man die Uretdion-Polyadditionsprodukte vom gegebenenfalls mitverwendeten Lösungsmittel befreit. Das kann durch einfaches Entfernen des Lösungsmittels im Vakuum erfolgen. Besonders geeignet zur Beseitigung des Lösungsmittels ist die Schmelzextrusion in einer Ausdampfschnecke.

Der Gesamt-NCO-Gehalt wird durch Titration mit Di-n-butylamin bestimmt, während durch Titration mit Di-sek-butylamin der Gehalt an freien NCO-Gruppen ermittelt wird.

Die erfindungsgemäß eingesetzten uretdionhaltigen Isophorondiisocyanat-Polyadditionsprodukte sind mahlbar bzw. pulverisierbar und lassen sich in dieser Form in Reaktionspartnern homogen verteilen. Ein großer Vorteil ist, daß diese Uretdion-Polyadditionsprodukte Reaktivpulver darstellen, die mit Reaktionspartnern definierte Vernetzungsreaktionen eingehen können und dabei keine Blockierungsmittel abspalten. Als Reaktionspartner kommen Verbindungen in Frage, die solche funktionellen Gruppen tragen, die sich mit Isocyanatgruppen während des Härtungsprozesses in Abhängigkeit von der Temperatur und Zeit umsetzen, z. B. Hydroxy-, Carboxyl-, Mercapto-Amino-, Amid-, Urethan- und (Thio) Harnstoffgruppen. Als Polymere können Polymerisate, Polykondensate und Polyadditionsverbindungen eingesetzt werden.

Bevorzugte Komponenten sind in erster Linie Polyether, Polythioether, Polyacetale, Polyamide, Polyesteramide, Epoxidharze mit Hydroxylgruppen im Molekül, Phenol/Formaldehyd-Harze, Aminoplaste und ihre Modifizierungsprodukte mit polyfunktionellen Alkoholen, Anilin/Formaldehyd-Harze, Polyazomethine, Polyurethane, Polyharnstoffe und Polythioharnstoffe, Polysulfonamide, Melaminabkömmlinge, Celluloseester und -Ether, teilweise verseifte Homo- und Copolymerisate von Vinylestern, teilweise acetalisierte Polyvinylalkohole, insbesondere aber Polyester und Acrylatharze.

Die erfindungsgemäß eingesetzten hydroxylgruppenhaltigen Polymeren haben eine OH-Funktionalität von ≧2,2 bis ≦3,5, vorzugsweise 2,5—3,4, Hydroxylzahlen zwischen 30 und 100 mg KOH/g, vorzugsweise 40—80 mg KOH/g, Viskositäten <80 000 mPa · s, vorzugsweise <30 000 mPa · s bei 160°C und Schmelzpunkte von ≧65°C bis ≦120°C, vorzugsweise 75—100°C.

In der folgenden Aufzählung werden bevorzugte Komponenten genannt:

Für die Herstellung von Polyestern bevorzugte Carbonsäuren können aliphatischer, cycloaliphatischer, aromatischer und/oder heterocyclischer Natur sein und gegebenenfalls, z. B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Terephthalsäure, Isophthalsäure, Trimellithsäure, Pyromellithsäure, Tetrahydrophthalsäure, Hexahydrophthalsäure, Di- und Tetrachlorphthalsäure, Endomethylentetrahydrophthalsäure und ihr Hexachlorderivat, Glutarsäure, Maleinsäure, Fumarsäure bzw. — soweit zugänglich — deren Anhydride, dimere und trimere Fettsäuren, wie Ölsäure, gegebenenfalls in Mischung mit monomeren Fettsäuren, Terephthalsäuredimethylester, Terephthalsäure-bis-glykolester, weiterhin cyclische Monocarbonsäuren, wie Benzoesäure, tert.-Butylbenzoesäure oder Hexahydrobenzoesäure. Als mehrwertige Alkohole kommen z. B. Ethylenglykol, Propylen-glykol-(1,2) und -(1,3), Butylenglykol-(1,4)- und -(2,3), Di-β-hydroxyethylbutandiol, Hexandiol-(1,6), Octandiol-(1,8), Neopentylglykol, Cyclohexandiol, 1,4-Bis-(hydroxymethyl)-cyclohexan, 2,2-Bis-(4-hydroxy-cyclohexyl)-propan, 2,2-Bis-(4-(β-hydroxyethoxy)-phenyl)-propan, 2-Methyl-1,3-propandiol, Glycerin, Trimethylolpropan, Hexantriol-(1,2,6), Butantriol-(1,2,4), Tris-(β-hydroxyethyl)-isocyanurat, Trimethylolethan, Pentaerythrit, Chinit, Mannit und Sorbit, Formose und deren Hydroxyalkylierungsprodukte, Methylglykosid, ferner Diethylenglykol, Triethylenglykol, Tetraethylenglykol, Polyethylenglykole, Dipropylenglykol, Tripropylenglykol, Polypropylenglykole, Dibutylenglykol, Polybutylenglykole und Xylylenglykol in Frage. Auch Mono- und Polyester aus Lactonen, z. B. ε-Caprolacton oder Hydroxycarbonsäuren, wie z. B. Hydroxypivalinsäure, ω-Hydroxydecansäure, ω-Hydroxycapronsäure, Thioglykolsäure, können eingesetzt werden; Polyester aus den oben erwähnten Polycarbonsäuren bzw. deren Derivate und Polyphenolen, wie Hydrochinon, Bisphenol-A, 4,4'-Dihydroxybiphenyl oder Bis-(4-hydroxyphenyl)-sulfon; mit Fettsäuren modifizierte Polyester (»Ölalkyde«) sowie natürlich vorkommende gesättigte oder ungesättigte Polyester, ihre Abbauprodukte oder Umesterungsprodukte mit Polyolen, wie Rizinusöl, Tallöl, Sojaöl, Leinöl; Polyester der Kohlensäure, die aus Hydrochinon, Diphenylolpropan, p-Xylylenglykol, Ethylenglykol, Butandiol oder Hexandiol-1,6 und anderen Polyolen durch übliche Kondensationsreaktionen, z. B. mit Phosgen oder Diethyl- bzw. Diphenylcarbonat, oder aus cyclischen Carbonaten, wie Glykolcarbonat oder Vinylidencarbonat, durch Polymerisation in bekannter Weise erhältlich sind; Polyester der Kieselsäure; Polyester der Phosphonsäuren, z. B. aus Methan-, Ethan-, β-Chlorethan-, Benzol- oder Styrolphosphonsäure, -phosphonsäureester und Polyalkoholen oder Polyphenolen der oben genannten Art; Polyester der phosphorigen Säure aus Phosphorigsäure, Phosphorigsäureestern, -esteramiden oder -esterchloriden und Polyalkoholen, Polyetheralkoholen und Polyphenolen; Polyester der Phosphorsäure, z. B. aus Polyestern der phosphorigen Säure durch Oxidation oder durch Umesterung von Phosphorsäureestern mit Polyalkoholen oder Polyphenolen; Polyester der Borsäure; Polysiloxane, wie z. B. die durch Hydrolyse von Dialkyldichlorsilanen mit Wasser und nachfolgende Behandlung mit Polyalkoholen oder die durch Anlagerung von Polysiloxandihydriden an Olefine, wie Allylalkohol oder Acrylsäure, erhältlichen Produkte.

Bevorzugte Polyester sind z. B. auch die Reaktionsprodukte von Polycarbonsäuren und Glycidylverbindungen, wie sie z. B. in der DE-OS 2 410 513 beschrieben sind.

Beispiele für Glycidylverbindungen, die verwendet werden können, sind Ester des 2,3-Epoxy-1-propanols mit monobasischen Säuren, die 4 bis 18 Kohlenstoffatome haben, wie Glycidylpalmitat, Glycidyllaurat und Glycidylstearat; Alkylenoxide mit 4 bis 18 Kohlenstoffatomen, wie Butylenoxid und Glycidylether, wie Octylglycidylether.

Als Dicarbonsäuren können bei diesem Verfahren sämtliche nachstehend unter II im folgenden aufgeführte Polycarbonsäuren verwendet werden. Monocarbonsäuren, welche beispielsweise unter III aufgeführt sind, können ebenfalls eingesetzt werden.

Bevorzugte Komponenten sind auch monomere Ester, z. B. Dicarbonsäure-bis-(hydroxylalkyl)ester, Monocarbonsäureester von mehr als 2wertigen Polyolen und Oligoester, die durch Kondensationsreaktionen aus in der Lackchemie üblichen Rohstoffe hergestellt werden können. Als solche sind z. B. anzusehen:

I. Alkohole mit 2—24, vorzugsweise 2—10 C-Atomen und 2—6 an nichtaromatische C-Atome gebundenen OH-Gruppen, z. B. Ethylenglykol, Propylen-glykole, Diethylenglykol, Dipropylenglykol, Butandiole, Neopentylglykol, Hexandiole, Hexantriole, Perhydrobisphenol, Dimethylolcyclohexan, Glycerin, Trimethylolethan, Trimethylolpropan, Pentaerythrit, Dipentaerythrit, Mannit;

II. Di- und Polycarbonsäuren mit 4—36 A-Atomen und 2—4 Carboxylgruppen, sowie deren veresterungsfähige Derivate, wie Anhydride und Ester, z. B. Phthalsäure(anhydrid), Isophthalsäure, Terephthalsäure, Hexahydroterephthalsäure, Hexahydroisophthalsäure, Alkyltetrahydrophthalsäuren, Endomethylentetrahydrophthalsäureanhydrid, Adipinsäure, Bernsteinsäure, Maleinsäure, Fumarsäure, Dimerfettsäuren, Trimellithsäure, Pyromellithsäure, Azelainsäure;

III. Monocarbonsäuren mit 6—24 C-Atomen, z. B. Caprylsäure, 2-Ethylhexansäure, Benzoesäure, p-tert.-Butylbenzoesäure, Hexahydrobenzoesäure, Monocarbonsäuregemische natürlicher Öle und Fette, wie Cocosölfettsäure, Sojaölfettsäure, Ricinenfettsäure, hydrierte und isomerisierte Fettsäuren, wie »Konjuvandol«-fettsäure sowie deren Gemische, wobei die Fettsäuren auch als Glyceride einsetzbar sind und unter Umesterung und/oder Dehydratisierung umgesetzt werden können;

IV. Einwertige Alkohole mit 1—18 C-Atomen, z. B. Methanol, Ethanol, Isopropanol, Cyclohexanol, Benzylalkohol, Isodecanol, Nonanol, Octanol, Oleylalkohol.

Die Polyester können auf an sich bekannte Weise durch Kondensation in einer Inertgasatmosphäre bei Temperaturen von 100—260°C, vorzugsweise 130—220°C, in der Schmelze oder in azeotroper Fahrweise gewonnen werden, wie z. B. in Methoden der Organischen Chemie (Houben-Weyl), Bd. 14/2, 1—5, 21—23, 40—44. Georg Thieme Verlag, Stuttgart, 1963 oder bei C. R. Martens, Alkyd Resins, 51—59, Reinhold Plastics Appl. Series, Reinhold Publishing Comp., New York, 1961 beschrieben ist.

Bevorzugte Acrylatharze, welche als OH-Komponente verwendet werden können, sind Homo- oder Copolymerisate, wobei z. B. folgende Monomere als Ausgangsprodukte gewählt werden können:

Ester der Acrylsäure und Methacrylsäure mit zweiwertigen, gesättigten, aliphatischen Alkoholen mit 2—4 C-Atomen, wie z. B. 2-Hydroxyethylacrylat, 2-Hydroxypropylacrylat, 4-Hydroxybutylacrylat und die entsprechenden Methacrylsäureester; Acrylsäure und Methacrylsäure; Acrylsäure- und Methacrylsäurealkylester mit 1—18, vorzugsweise 1—8 C-Atomen, in der Alkoholkomponente, wie z. B. Methylacrylat, Ethylacrylat, Propylacrylat, Isopropylacrylat, n-Butylacrylat, tert.-Butylacrylat, 2-Ethylhexylacrylat, Stearylacrylat und die entsprechenden Methacrylsäureester; Acrylsäure- und Methacrylsäurecyclohexylester; Acrylnitril und Methacrylnitril; Acrylamid und Methacrylamid; N-Methoxymethyl(meth)acrylsäureamid.

Besonders bevorzugte Acrylatharze sind Copolymere aus

1. 0—50 Gew.-% Monoester der Acrylsäure oder Methacrylsäure mit zwei- oder mehrwertigen Alkoholen, wie Butandiol-(1,4)-monoacrylat, Hydroxypropyl(meth)-acrylat, Diethylenglykolmonoacrylat, Hydroxyethyl-(meth)-acrylat; ferner Vinylglykol, Vinylthioethanol, Allylalkohol, Butandiol-1,4-monovinyl-Ether;
2. 5—95 Gew.-% Ester der Acrylsäure oder Methacrylsäure mit einwertigen Alkoholen, die 1 bis 12 Kohlenstoffatome enthalten, wie z. B. Methylmethacrylat, Ethylacrylat, n-Butylacrylat oder 2-Ethylhexylacrylat;
3. 0—50 Gew.-% aromatische Vinylverbindungen, wie Styrol, $\alpha$-Methylstyrol oder Vinyltoluol;
4. 0—20 Gew.-% andere Monomere mit funktionellen Gruppen, wie z. B. Acrylsäure, Methacrylsäure, Crotonsäure, Itaconsäure, Maleinsäure, Fumarsäure, Maleinsäureanhydrid, Maleinsäurehalbester, Acrylamid, Methacrylamid, Acrylnitril oder N-Methylol-(meth)-acrylamid sowie Glycidyl(meth)acrylat, wobei der Anteil der Gruppe 1. und/oder 4. mindestens 5 Gew.-% beträgt.

Die Acrylatharze können nach den üblichen Methoden hergestellt werden, also durch Lösungs-, Suspensions-, Emulsions- oder Fällungspolymerisation; bevorzugt aber durch Substanzpolymerisation, die ihrerseits mittels UV-Licht initiiert werden kann.

Als weitere Polymerisationsinitiatoren werden die üblichen Peroxide oder Azoverbindungen, wie z. B. Dibenzoylperoxid, tert.-Butylperbenzoat, oder Azodiisobutyronitril verwendet. Das Molekulargewicht kann z. B. mit Schwefelverbindungen, wie tert.-Dodecylmercaptan, geregelt werden.

Bevorzugte Polyether können z. B. durch Polyaddition von Epoxiden, wie Ethylenoxid, 3,3-Bis-(chlormethyl)-oxacyclobutan, Tetrahydrofuran, Styroloxid, dem Bis-(2,3-epoxypropyl)ether des Diphenylolpropans oder Epichlorhydrin mit sich selbst, z. B. in Gegenwart von $BF_3$ oder durch Anlagerung dieser Epoxide, gegebenenfalls im Gemisch oder nacheinander, an Startkomponenten mit reaktionsfähigen Wasserstoffatomen, wie Alkohole oder Amine, z. B. Wasser, Ethylenglykol, Propylenglykol-(1,3) oder -(1,2), Pentamethylenglykol, Hexandiol, Decamethylenglykol, Trimethylolpropan, 4,4'-Dihydroxydiphenyl-propan, Anilin, Ammoniak, Ethanolamin, Ethylendiamin, Di-($\beta$-hydroxypropyl)-methylamin, Di-($\beta$-hydroxyethyl)-anilin, Hydrazin sowie aus hydroxyalkylierten Phenolen, wie z. B. 0,0-Di-($\beta$-hydroxyethyl)-resorcin, hergestellt werden.

Ebenso können hydroxylgruppenhaltige Polyurethane und/oder Polyharnstoffe eingesetzt werden.

Als Polyhydroxylverbindung können selbstverständlich Gemische mehrerer Stoffe eingesetzt werden.

Zu den Hilfsmitteln in den erfindungsgemäßen pulverförmigen Bindemitteln zählen Pigmente und Füllstoffe sowie Substanzen zur Verbesserung des Verlaufs und zur Vermeidung von Oberflächenstörungen, wie z. B. Silikonöle, p-Toluolsulfonsäureamid, flüssige Acrylatharze und Weichmacher sowie Katalysatoren.

Geeignete Katalysatoren sind dieselben, die zur Herstellung der Uretdion-Polyadditionsprodukte beschrieben wurden.

Die Erweichungspunkte der erfindungsgemäßen Polyurethan-Pulverlacke-Komponenten liegen so, daß sie sich bei Temperaturen zwischen 80°C und etwa 120°C mit den zur Herstellung der erfindungsgemäßen Überzugsmittel notwendigen Zusätze verarbeiten lassen. Die Erweichungspunkte der Mischung liegen andererseits so, daß sie zu nicht-klumpenden, frei-fließenden Pulvern mit einer Teilchengröße von etwa 20 bis etwa 120 µm vermahlen werden können.

Die pulverförmigen Überzugsmittel können in geeigneten Mischaggregaten, z. B. in Rührkesseln oder Mischschnecken (Extrudern), hergestellt werden und zu Pulvern verarbeitet werden, die in üblicher Weise, insbesondere nach dem elektrostatischen Pulverspritzverfahren (EPS-Verfahren) auf Unterlagen aufgetragen werden.

Die Lackfilme härten durch Erhitzen auf Temperaturen oberhalb 120°C, vorzugsweise zwischen etwa 160°C und 200°C, rasch zu harten und glatten Überzügen aus.

## Herstellungsbeispiele

### A Isocyanatkomponente

#### 1) Herstellung des Uretdiongruppen-haltigen Isophorondiisocyanats

100 Gew.-T. IPDI wurden mit 1,0 Gew.-T. Tris-(dimethyl-amino)-phosphin versetzt und 20 h bei Raumtemperatur stehen gelassen. Der NCO-Gehalt dieses Gemisches nach dieser Zeit betrug 31 Gew.-%, d. h., daß ca. 40% des eingesetzten IPDI reagiert hatten. Anschließend wurde dieses Gemisch der Dünnschichtdestillation bei 130°C und 0,1 Torr 0,133 mbar unterworfen. Der Rückstand war katalysatorfrei und hatte einen NCO-Gehalt von 17,6%. Wurde der Rückstand 30—60 Minuten bei 180°C erhitzt, so stieg der NCO-Gehalt auf 37,1—37,7%. Dieser »sogenannte Heißwert« war ein direktes Maß für den Gehalt an Uretdiongruppen im Reaktionsprodukt.

#### 2) Herstellung der IPDI-Uretdion-Addukte

Allgemeine Herstellungsvorschrift

Das gemäß A1 hergestellte IPDI-Uretdiondiisocyanat wird vorgelegt, gegebenenfalls im Lösungsmittel wie Aceton, Methylenchlorid, Toluol oder Xylol und auf 50°—100°C erwärmt. Unter starkem Rühren und Inertgasatmosphäre fügt man dem Uretdiondiisocyanat das Glykol so zu, daß die Reaktionstemperatur 110°C nicht übersteigt. Die Umsetzung, die durch titrimetrische NCO-Bestimmung kontrolliert wird, ist nach 2—5 Stunden bei ca. 100°C beendet. Nach Abkühlen, gegebenenfalls Absaugen und Trocknen und gegebenenfalls Zerkleinern der Reaktionsprodukte erhält man schwach gelbliche, freifließende Pulver.

Vernetzeraddukte weisen bei 1760—1780 $cm^{-1}$ die charakteristische intensive Bande der Uretdiongruppe auf.

Isocyanatkomponente

| Ausgangskomponenten | | | Reaktionsprodukte | | | |
|---|---|---|---|---|---|---|
| Beisp. A2 | IPDI-Uretdion Mol | Diol Mol | Gesamt-NCO-% | Freie-NCO-% | Schmelzpunkt °C | DTA °C |
| 1 | 2 | Butandiol 1 | 25,11 | 7,6 | 81—86 | 41—55 |
| 2 | 3 | Butandiol 2 | 22,14 | 4,6 | 93—96 | 45—57 |
| 3 | 4 | Butandiol 3 | 20,5 | 3,3 | 98—102 | 49—60 |
| 4 | 5 | Butandiol 4 | 19,4 | 2,5 | 100—106 | 47—61 |
| 5 | 5,5 | Butandiol 4,5 | 19,0 | 2,1 | 102—115 | 50—60 |
| 6 | 3 | HD 2 | 21,1 | 4,4 | 76—81 | 45—55 |
| 7 | 4,5 | HD 3,5 | 19,1 | 2,8 | 77—82 | 44—53 |

Fortsetzung

| Ausgangskomponenten | | | Reaktionsprodukte | | | |
|---|---|---|---|---|---|---|
| Beisp. A2 | IPDI-Uretdion Mol | Diol Mol | Gesamt-NCO-% | Freie-NCO-% | Schmelzpunkt °C | DTA °C |
| 8 | 5 | HD 4 | 18,9 | 2,4 | 80–85 | 47–58 |
| 9 | 3 | MP*) 2 | 20,9 | 4,6 | 75–78 | 44–55 |
| 10 | 5 | MP*) 4 | 18,6 | 2,7 | 80–84 | 47–57 |
| 11 | 4,5 | NPG 3,5 | 19,3 | 2,7 | 81–86 | 48–57 |
| 12 | 4,5 | DEG*) 3,5 | 19,2 | 2,8 | 78–80 | 42–51 |
| 13 | 4,5 | EG*) 3,5 | 20,5 | 2,9 | 81–85 | 43–52 |
| 14 | 4 | DMC 3 | 18,8 | 3,0 | 86–91 | 49–59 |
| 15 | 4,5 | TMH-diol 3,5 | 18,0 | 2,5 | 75–81 | 42–51 |

MP*) ≙ 3-Methylpentandiol-1,5;
DEG*) ≙ Diethylenglykol;
EG*) ≙ Ethylenglykol.

B Polyolkomponente

Allgemeine Herstellungsvorschrift

Die Ausgangskomponenten – Terephthalsäure (Ts), Dimethylterephthalat (DMT), Hexandiol-1,6 (HD), Neopentylglykol (NPG), 1,4-Dimethylolcyclohexan (DMC) und Trimethylolpropan (TMP) – wurden in einen Reaktor gegeben und mit Hilfe eines Ölbades erwärmt. Nachdem die Stoffe zum größten Teil aufgeschmolzen waren, wurden bei einer Temperatur von 160°C 0,05 Gew.-% Di-n-butylzinnoxid als Katalysator zugesetzt. Die erste Methanolabspaltung trat bei einer Temperatur von ca. 170°C auf. Innerhalb 6–8 Stunden wurde die Temperatur auf 220–230°C erhöht und innerhalb weiterer 12–15 Stunden die Reaktion zu Ende geführt. Der Polyester wurde auf 200°C abgekühlt und durch Anlegen von Vakuum (1 mm Hg) (1,33 mbar) innerhalb 30–45 Minuten weitgehend von flüchtigen Anteilen befreit. Während der gesamten Reaktionszeit wurde das Sumpfprodukt gerührt und ein schwacher $N_2$-Strom durch das Reaktionsgemisch geleitet.

Folgende Tabelle gibt Polyesterzusammensetzungen und die entsprechenden physikalischen und chemischen Kenndaten wieder.

Polyester

| Ausgangskomponenten | | | | | | |
|---|---|---|---|---|---|---|
| Beisp. | Ts Mol | DMT Mol | HD Mol | NPG Mol | DMC Mol | TMP Mol |
| 1 | 9 | 9 | 3 | 13 | 3 | 1 |
| 2 | 6 | 7 | 4 | 7,1 | 2 | 1 |

Fortsetzung

| Ausgangskomponenten | | | | | | |
|---|---|---|---|---|---|---|
| Beisp. | Ts Mol | DMT Mol | HD Mol | NPG Mol | DMC Mol | TMP Mol |
| 3 | 6 | 6 | 4 | 5 | 3 | 1 |
| 4 | 14 | 14 | 8,75 | 13,5 | 5 | 3 |
| 5 | 12 | 12 | 6,75 | 11,5 | 5 | 3 |

Polyester Tabelle (Fortsetzung)

| Chemische und physikalische Kenndaten | | | | | |
|---|---|---|---|---|---|
| Beisp. | OH-Zahl mg KOH/g | Säurezahl mg KOH/g | Schmelzp. °C | DTA °C | Viskos. b.160°C mPa · s |
| 1 | 50–56 | 3–4 | ca. 70 | ca. 50 | ~12 000 |
| 2 | 44–48 | 3–4 | ca. 75 | ca. 50 | ~15 000 |
| 3 | 48–52 | 3–4 | ca. 80 | ca. 55 | ~15 000 |
| 4 | 49–53 | 3–4 | ca. 75 | ca. 50 | ~19 000 |
| 5 | 56–61 | 3–4 | ca. 80 | ca. 55 | ~16 000 |

## C) Blockierungsmittelfreie Polyurethan-Pulverlacke

### Allgemeine Herstellungsvorschrift

Die gemahlenen Produkte, IPDI-Uretdion-Addukt, Polyester, Verlaufmittel*)-Masterbatch, Katalysator*)-Masterbatch werden gegebenenfalls mit dem Weißpigment und gegebenenfalls Füllstoffen, in einem Kollergang innig vermischt und anschließend im Extruder bei 100–130°C homogenisiert. Nach dem Erkalten wird das Extrudat gebrochen und mit einer Stiftmühle auf eine Korngröße <100 μm gemahlen. Das so hergestellte Pulver wird mit einer elektrostatischen Pulverspritzanlage bei 60 KV auf entfettete, gegebenenfalls vorbehandelte Eisenbleche appliziert und in einem Umlufttrokkenschrank bei Temperaturen zwischen 160° und 200°C eingebrannt.

Die IR-Spektren der Pulverlacke weisen keine NCO-Banden bei 2400 $cm^{-1}$ auf. Die freien NCO-Gruppen haben während des Extrudierprozesses reagiert.

*) Verlaufmittel-Masterbatch:

Es werden 10 Gew.-% des Verlaufmittels – ein handelsübliches Copolymeres von Butylacrylat und 2-Äthylhexylacrylat – in dem entsprechenden Polyester in der Schmelze homogenisiert und nach dem Erstarren zerkleinert.

*) Katalysator-Masterbatch:

Es werden 5–10 Gew.-% des Katalysators, z. B. Dibutylzinndilaurat, in dem entsprechenden Polyester in der Schmelze homogenisiert und nach dem Erstarren zerkleinert.

Die Abkürzungen in den folgenden Tabellen bedeuten:

SD = Schichtdicke in μm
HK = Härte n. König in sec (DIN 53 157)
HB = Härte n. Buchholz (DIN 53 153)
ET = Tiefung n. Erichsen in mm (DIN 53 156)

GS = Gitterschnittprüfung (DIN 53 151)
GG 60° = Messung des Glanzes n. Gardner (ASTM-D 523)
Imp. rev. = Impact reverse in inch · lb (g · m)

## Beispiel 1

### Pigmentierter Lack

Nach den beschriebenen Verfahren wurde der Pulverlack mit folgender Rezeptur hergestellt, appliziert und zwischen 160° und 200°C eingebrannt.

628,85 Gew.-T. Polyester gemäß Beispiel B 1
151,15 Gew.-T. Uretdion-Isocyanat gemäß A 23
600,00 Gew.-T. Weißpigment ($TiO_2$)
75,00 Gew.-T. Verlaufmittel-Masterbatch
45,00 Gew.-T. Katalysator-Masterbatch

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 8'/200°C | 60–70 | 171 | 91 | 9,8–10,1 | 0 | 60 (691) | 91 |
| 10'/200°C | 60–75 | 170 | 100 | 10,7–10,9 | 0 | >82 (945) | 90 |
| 15'/200°C | 70–80 | 173 | 100 | 10,7–11,5 | 0 | >82 (945) | 89 |
| 15'/180°C | 50–60 | 174 | 91 | 9,5–10,0 | 0 | 50 (576) | 89 |
| 20'/180°C | 70–80 | 178 | 100 | 10,7–11,1 | 0 | 82 (945) | 91 |
| 25'/180°C | 65–80 | 177 | 111 | 11,3–11,9 | 0 | >82 (945) | 89 |
| 20'/170°C | 60–80 | 173 | 91 | 10,1 | 0 | 40 (461) | 91 |
| 25'/170°C | 70–85 | 176 | 100 | 10,7–11,5 | 0 | >82 (945) | 88 |
| 30'/170°C | 60–80 | 174 | 100 | 11,1–11,8 | 0 | >82 (945) | 92 |
| 30'/160°C | 50–70 | 171 | 91 | 2,1– 3,2 | 0 | 10 (115) | 90 |
| 35'/160°C | 60–80 | 174 | 100 | 5,6– 7,1 | 0 | 30 (346) | 91 |

## Beispiel 2

### Pigmentierter Lack

Nach den beschriebenen Verfahren wurde der Pulverlack mit folgender Rezeptur hergestellt, appliziert und zwischen 160° und 200°C eingebrannt.

640,21 Gew.-T. Polyester gemäß Beispiel B 3
139,79 Gew.-T. Uretdion-Isocyanat gemäß A 23
600,00 Gew.-T. Weißpigment ($TiO_2$)
75,00 Gew.-T. Verlaufmittel-Masterbatch
45,00 Gew.-T. Katalysator-Masterbatch

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 8'/200°C | 60– 80 | 177 | 91 | 9,7–10,1 | 0 | 60 (691) | 88 |
| 10'/200°C | 70– 90 | 176 | 100 | 11,4–12 | 0 | >82 (945) | 90 |
| 15'/200°C | 70–100 | 178 | 100 | 11,1–11,9 | 0 | >82 (945) | 89 |
| 15'/180°C | 60– 70 | 176 | 91 | 10,0–10,1 | 0 | 50 (576) | 87 |
| 20'/180°C | 55– 75 | 178 | 100 | 10,8 | 0 | >82 (945) | 90 |
| 25'/180°C | 70– 90 | 173 | 100 | 11,1 | 0 | >82 (945) | 89 |
| 20'/170°C | 50– 80 | 174 | 91 | 9,2– 9,7 | 0 | 40 (461) | 88 |
| 25'/170°C | 60– 70 | 178 | 100 | 10,1 | 0 | >82 (945) | 90 |
| 30'/170°C | 70– 80 | 174 | 111 | 11,4 | 0 | >82 (945) | 87 |
| 30'/160°C | 50– 70 | 173 | 100 | 2,7– 4,1 | 0 | 10 (115) | 88 |
| 35'/160°C | 70– 80 | 178 | 111 | 6,8– 7,4 | 0 | 30 (346) | 89 |

Beispiel 3

Pigmentierter Lack

Nach den beschriebenen Verfahren wurde der Pulverlack mit folgender Rezeptur hergestellt, appliziert und zwischen 160° und 200°C eingebrannt.

620,00 Gew.-T. Polyester gemäß Beispiel B 5
160,00 Gew.-T. Uretdion-Isocyanat gemäß A 23
600,00 Gew.-T. Weißpigment ($TiO_2$)
75,00 Gew.-T. Verlaufmittel-Masterbatch
45,00 Gew.-T. Katalysator-Masterbatch

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 8'/200°C | 50– 70 | 172 | 100 | 8,5– 9,1 | 0 | 50 (576) | 85 |
| 10'/200°C | 60– 70 | 176 | 111 | 9,9–10,6 | 0 | 70 (806) | 84 |
| 15'/200°C | 55– 85 | 177 | 111 | 10,4–10,9 | 0 | >82 (945) | 86 |
| 15'/180°C | 70– 80 | 173 | 91 | 7,9– 9,1 | 0 | 50 (576) | 86 |
| 20'/180°C | 100–120 | 174 | 100 | 9,4–10,1 | 0 | 80 (922) | 84 |
| 25'/180°C | 95–105 | 172 | 100 | 10,1–10,5 | 0 | >82 (945) | 85 |
| 20'/170°C | 60– 80 | 172 | 100 | 7,8– 8,4 | 0 | 40 (461) | 86 |

Fortsetzung

| Einbrenn-bedingungen Zeit/Temp. | Mechanische Kenndaten SD | HK | HB | ET | GS | Imp. rev. | GG 60° |
|---|---|---|---|---|---|---|---|
| 25'/170°C | 70– 90 | 178 | 91 | 9,7–10,1 | 0 | 70 (806) | 84 |
| 30'/170°C | 75– 95 | 174 | 111 | 10,0–10,7 | 0 | >82 (945) | 87 |
| 30'/160°C | 50– 70 | 170 | 91 | 1,8– 3,1 | 0 | 10 (115) | 84 |
| 35'/160°C | 80– 90 | 174 | 100 | 6,5– 7,1 | 0 | 30 (346) | 86 |

## Beispiel 4

### Pigmentierter Lack

Nach den beschriebenen Verfahren wurde der Pulverlack mit folgender Rezeptur hergestellt, appliziert und zwischen 160° und 200°C eingebrannt.

635,91 Gew.-T. Polyester gemäß Beispiel B 2
144,09 Gew.-T. Uretdion-Isocyanat gemäß A 25
600,00 Gew.-T. Weißpigment ($TiO_2$)
75,00 Gew.-T. Verlaufmittel-Masterbatch
45,00 Gew.-T. Katalysator-Masterbatch

| Einbrenn-bedingungen Zeit/Temp. | Mechanische Kenndaten SD | HK | HB | ET | GS | Imp. rev. | GG 60° |
|---|---|---|---|---|---|---|---|
| 8'/200°C | 60–80 | 174 | 91 | 8,9– 9,4 | 0 | 40 (461) | 84 |
| 10'/200°C | 70–90 | 172 | 100 | 10,1–10,4 | 0 | 80 (922) | 86 |
| 15'/200°C | 65–85 | 170 | 91 | 10,4–10,8 | 0 | >82 (945) | 87 |
| 15'/180°C | 50–70 | 171 | 100 | 8,0– 8,4 | 0 | 50 (576) | 83 |
| 20'/180°C | 70–80 | 174 | 100 | 9,1–10,4 | 0 | 70 (806) | 86 |
| 25'/180°C | 75–95 | 176 | 91 | 10,1–10,9 | 0 | 80 (922) | 84 |
| 20'/170°C | 60–70 | 174 | 100 | 8,1– 8,3 | 0 | 60 (691) | 82 |
| 25'/170°C | 70–90 | 174 | 111 | 9,0– 9,8 | 0 | 70 (806) | 84 |
| 30'/170°C | 50–70 | 176 | 100 | 10,1–10,7 | 0 | 80 (922) | 83 |
| 30'/160°C | 60–80 | 170 | 91 | 4,1– 5,6 | 0 | 20 (230) | 81 |
| 35'/160°C | 70–90 | 174 | 100 | 5,1– 6,1 | 0 | 30 (346) | 84 |

Beispiel 5

Pigmentierter Lack

Nach den beschriebenen Verfahren wurde der Pulverlack mit folgender Rezeptur hergestellt, appliziert und zwischen 160° und 200°C eingebrannt.

652,63 Gew.-T. Polyester gemäß Beispiel B 1
127,37 Gew.-T. Uretdion-Isocyanat gemäß A 21
600,00 Gew.-T. Weißpigment ($TiO_2$)
75,00 Gew.-T. Verlaufmittel-Masterbatch
45,00 Gew.-T. Katalysator-Masterbatch

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 8'/200°C | 60– 80 | 174 | 100 | 9,1– 9,8 | 0 | 70 (806) | 86 |
| 10'/200°C | 70– 90 | 178 | 111 | 10,4–10,9 | 0 | >82 (945) | 84 |
| 15'/200°C | 65– 85 | 177 | 100 | 10,6–11,0 | 0 | >82 (945) | 85 |
| 15'/180°C | 60– 70 | 176 | 91 | 9,0– 9,4 | 0 | 60 (691) | 87 |
| 20'/180°C | 65– 85 | 174 | 100 | 9,8–10,2 | 0 | >82 (945) | 83 |
| 25'/180°C | 70– 85 | 173 | 100 | 10,0–10,9 | 0 | >82 (945) | 84 |
| 20'/170°C | 70– 90 | 178 | 100 | 7,8– 8,7 | 0 | 30 (346) | 86 |
| 25'/170°C | 85–100 | 172 | 91 | 9,4– 9,5 | 0 | 70 (806) | 84 |
| 30'/170°C | 75– 95 | 174 | 100 | 9,8–10,7 | 0 | >82 (945) | 85 |
| 30'/160°C | 65– 85 | 171 | 91 | 2,1– 3,3 | 0 | 20 (230) | 84 |
| 35'/160°C | 70– 80 | 176 | 91 | 4,8– 6,1 | 0 | 30 (346) | 87 |

Beispiel 6

Pigmentierter Lack

Nach den beschriebenen Verfahren wurde der Pulverlack mit folgender Rezeptur hergestellt, appliziert und zwischen 160° und 200°C eingebrannt.

630,4 Gew.-T. Polyester gemäß Beispiel B 3
149,6 Gew.-T. Uretdion-Isocyanat gemäß A 28
600,0 Gew.-T. Weißpigment ($TiO_2$)
75,0 Gew.-T. Verlaufmittel-Masterbatch
45,0 Gew.-T. Katalysator-Masterbatch

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 8'/200°C | 65–85 | 170 | 100 | 10,0–10,2 | 0 | 40 (461) | 84 |
| 10'/200°C | 65–75 | 174 | 100 | 11,1–11,2 | 0 | 70 (806) | 87 |

Fortsetzung

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 15'/200°C | 50–75 | 172 | 111 | 10,9–11,4 | 0 | >82 (945) | 85 |
| 15'/180°C | 50–70 | 174 | 100 | 9,1– 9,4 | 0 | 30 (346) | 83 |
| 20'/180°C | 65–80 | 171 | 91 | 10,5–11,1 | 0 | 70 (806) | 86 |
| 25'/180°C | 70–90 | 176 | 100 | 10,7–10,9 | 0 | 80 (922) | 84 |
| 20'/170°C | 60–80 | 172 | 100 | 8,7– 9,1 | 0 | 20 (230) | 84 |
| 25'/170°C | 70–90 | 171 | 100 | 9,2– 9,4 | 0 | 60 (691) | 87 |
| 30'/170°C | 65–85 | 177 | 111 | 9,8–10,1 | 0 | 80 (922) | 86 |
| 30'/160°C | 70–90 | 170 | 100 | 2,1– 2,8 | 0 | 10 (115) | 85 |
| 35'/160°C | 65–90 | 172 | 91 | 4,8– 6,2 | 0 | 20 (230) | 82 |

## Beispiel 7

### Pigmentierter Lack

Nach den beschriebenen Verfahren wurde der Pulverlack mit folgender Rezeptur hergestellt, appliziert und zwischen 170° und 200°C eingebrannt.

625,5 Gew.-T. Polyester gemäß Beispiel B 4
154,5 Gew.-T. Uretdion-Isocyanat gemäß A 28
600,0 Gew.-T. Weißpigment ($TiO_2$)
75,0 Gew.-T. Verlaufmittel-Masterbatch
45,0 Gew.-T. Katalysator-Masterbatch

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 8'/200°C | 70– 90 | 172 | 91 | 9,1– 9,8 | 0 | 60 (691) | 84 |
| 10'/200°C | 65– 80 | 176 | 100 | 9,7–10,1 | 0 | 80 (922) | 83 |
| 15'/200°C | 60– 85 | 177 | 91 | 10,1–10,5 | 0 | >82 (945) | 84 |
| 15'/180°C | 55– 75 | 175 | 100 | 8,4– 8,9 | 0 | 30 (346) | 86 |
| 20'/180°C | 90–100 | 173 | 100 | 9,1– 9,3 | 0 | 50 (576) | 81 |
| 25'/180°C | 70– 80 | 178 | 100 | 9,5–10,6 | 0 | 80 (922) | 85 |
| 20'/170°C | 60– 90 | 170 | 100 | 7,2– 8,5 | 0 | 30 (346) | 82 |
| 25'/170°C | 70–100 | 174 | 91 | 7,9– 9,1 | 0 | 40 (461) | 87 |
| 30'/170°C | 85– 95 | 177 | 111 | 8,7– 9,9 | 0 | 70 (806) | 84 |

Beispiel 8

Pigmentierter Lack

Nach den beschriebenen Verfahren wurde der Pulverlack mit folgender Rezeptur hergestellt, appliziert und zwischen 160° und 200°C eingebrannt.

628,4 Gew.-T. Polyester gemäß Beispiel B 3
151,6 Gew.-T. Uretdion-Isocyanat gemäß A 210
600,0 Gew.-T. Weißpigment ($TiO_2$)
75,0 Gew.-T. Verlaufmittel-Masterbatch
45,0 Gew.-T. Katalysator-Masterbatch

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 8'/200°C | 70– 90 | 175 | 100 | 9,8–10,5 | 0 | 70 (806) | 88 |
| 10'/200°C | 80–100 | 179 | 100 | 12 | 0 | >82 (945) | 89 |
| 15'/200°C | 70– 80 | 176 | 111 | 11,7–11,9 | 0 | >82 (945) | 91 |
| 15'/180°C | 75– 90 | 177 | 100 | 10,4–10,6 | 0 | 80 (922) | 91 |
| 20'/180°C | 75– 85 | 174 | 100 | 11,6–11,8 | 0 | >82 (945) | 87 |
| 25'/180°C | 70– 85 | 178 | 100 | 11,7–12 | 0 | >82 (945) | 89 |
| 20'/170°C | 60– 70 | 176 | 100 | 8,9–10,1 | 0 | 60 (691) | 88 |
| 25'/170°C | 65– 85 | 178 | 100 | 10,1–10,9 | 0 | 80 (922) | 91 |
| 30'/170°C | 50– 70 | 173 | 100 | 11,1–11,7 | 0 | >82 (945) | 90 |
| 30'/160°C | 60– 80 | 174 | 100 | 3,1– 3,8 | 0 | 20 (230) | 89 |
| 35'/160°C | 70– 90 | 171 | 100 | 5,6– 5,9 | 0 | 40 (461) | 87 |

Beispiel 9

Pigmentierter Lack

Nach den beschriebenen Verfahren wurde der Pulverlack mit folgender Rezeptur hergestellt, appliziert und zwischen 160° und 200°C eingebrannt.

633,4 Gew.-T. Polyester gemäß Beispiel B 2
146,6 Gew.-T. Uretdion-Isocyanat gemäß A 210
600,0 Gew.-T. Weißpigment ($TiO_2$)
75,0 Gew.-T. Verlaufmittel-Masterbatch
45,0 Gew.-T. Katalysator-Masterbatch

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 8'/200°C | 60– 90 | 175 | 100 | 9,4–10,1 | 0 | 70 (806) | 91 |
| 10'/200°C | 60– 80 | 171 | 100 | 9,8–11,5 | 0 | >82 (945) | 89 |

Fortsetzung

| Einbrenn-bedingungen Zeit/Temp. | Mechanische Kenndaten SD | HK | HB | ET | GS | Imp. rev. | GG 60° |
|---|---|---|---|---|---|---|---|
| 15'/200°C | 80– 90 | 173 | 100 | 10,8–11,6 | 0 | >82 (945) | 92 |
| 15'/180°C | 55– 70 | 172 | 100 | 10,1–10,4 | 0 | 70 (806) | 88 |
| 20'/180°C | 60– 90 | 174 | 100 | 11,0–11,3 | 0 | >82 (945) | 87 |
| 25'/180°C | 70– 80 | 177 | 100 | 10,2–12 | 0 | >82 (945) | 91 |
| 20'/170°C | 60– 90 | 171 | 91 | 9,4–10,1 | 0 | 40 (461) | 87 |
| 25'/170°C | 55– 85 | 177 | 100 | 9,7–11,1 | 0 | 60 (691) | 91 |
| 30'/170°C | 70– 85 | 172 | 91 | 10–12 | 0 | 80 (922) | 89 |
| 30'/160°C | 80– 90 | 171 | 100 | 3,1– 4,4 | 0 | 20 (230) | 88 |
| 35'/160°C | 75–100 | 177 | 91 | 5,6– 7,1 | 0 | 40 (461) | 91 |

Beispiel 10

Pigmentierter Lack

Nach den beschriebenen Verfahren wurde der Pulverlack mit folgender Rezeptur hergestellt, appliziert und zwischen 160° und 200°C eingebrannt.

621,1 Gew.-T. Polyester gemäß Beispiel B 1
158,9 Gew.-T. Uretdion-Isocyanat gemäß A 211
600,0 Gew.-T. Weißpigment ($TiO_2$)
75,0 Gew.-T. Verlaufmittel-Masterbatch
45,0 Gew.-T. Katalysator-Masterbatch

| Einbrenn-bedingungen Zeit/Temp. | Mechanische Kenndaten SD | HK | HB | ET | GS | Imp. rev. | GG 60° |
|---|---|---|---|---|---|---|---|
| 8'/200°C | 70– 80 | 174 | 91 | 8,1– 8,9 | 0 | 40 (461) | 87 |
| 10'/200°C | 75–100 | 176 | 100 | 9,9–10,9 | 0 | 80 (922) | 89 |
| 15'/200°C | 80–100 | 173 | 100 | 9,7–11,2 | 0 | >82 (945) | 87 |
| 15'/180°C | 80– 90 | 171 | 91 | 8,4– 8,9 | 0 | 30 (346) | 88 |
| 20'/180°C | 70–100 | 176 | 91 | 10,1–11 | 0 | 70 (806) | 91 |
| 25'/180°C | 65– 85 | 173 | 100 | 9,9–10,8 | 0 | >82 (945) | 86 |
| 20'/170°C | 70– 90 | 170 | 100 | 7,9– 9,1 | 0 | 40 (461) | 89 |
| 25'/170°C | 60– 80 | 177 | 91 | 8,2– 9,5 | 0 | 60 (691) | 89 |
| 30'/170°C | 55– 85 | 174 | 100 | 8,8–10,0 | 0 | 70 (806) | 87 |

Fortsetzung

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 30'/160°C | 60– 80 | 172 | 91 | 2,1– 4,1 | 0 | 20 (230) | 90 |
| 35'/160°C | 70– 85 | 175 | 100 | 5,1– 6,0 | 0 | 30 (346) | 87 |

Beispiel 11

Pigmentierter Lack

Nach den beschriebenen Verfahren wurde der Pulverlack mit folgender Rezeptur hergestellt, appliziert und zwischen 170° und 200°C eingebrannt.

611,2 Gew.-T. Polyester gemäß Beispiel B 5
168,8 Gew.-T. Uretdion-Isocyanat gemäß A 212
600,0 Gew.-T. Weißpigment ($TiO_2$)
75,0 Gew.-T. Verlaufmittel-Masterbatch
45,0 Gew.-T. Katalysator-Masterbatch

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 8'/200°C | 60–80 | 172 | 91 | 8,8– 9,4 | 0 | 50 (576) | 88 |
| 10'/200°C | 55–75 | 171 | 100 | 9,5–10,9 | 0 | 70 (806) | 89 |
| 15'/200°C | 70–90 | 177 | 100 | 9,9–11,2 | 0 | >82 (945) | 87 |
| 15'/180°C | 65–85 | 178 | 100 | 8,1– 8,9 | 0 | 30 (346) | 89 |
| 20'/180°C | 70–80 | 174 | 100 | 10,1–11 | 0 | 70 (806) | 91 |
| 25'/180°C | 80–90 | 173 | 111 | 9,9–10,9 | 0 | >82 (945) | 88 |
| 20'/170°C | 60–70 | 176 | 100 | 8,0– 9,0 | 0 | 30 (346) | 91 |
| 25'/170°C | 50–70 | 172 | 91 | 8,8–10,2 | 0 | 60 (691) | 88 |
| 30'/170°C | 60–85 | 175 | 111 | 9,6–10,4 | 0 | 80 (922) | 90 |

Beispiel 12

Pigmentierter Lack

Nach den beschriebenen Verfahren wurde der Pulverlack mit folgender Rezeptur hergestellt, appliziert und zwischen 170° und 200°C eingebrannt.

644,9 Gew.-T. Polyester gemäß Beispiel B 2
135,1 Gew.-T. Uretdion-Isocyanat gemäß A 213
600,0 Gew.-T. Weißpigment ($TiO_2$)
75,0 Gew.-T. Verlaufmittel-Masterbatch
45,0 Gew.-T. Katalysator-Masterbatch

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 8'/200°C | 70–90 | 174 | 91 | 9,1– 9,8 | 0 | 70 (806) | 91 |
| 10'/200°C | 75–85 | 170 | 100 | 10,4–10,7 | 0 | 80 (922) | 93 |
| 15'/200°C | 60–80 | 176 | 91 | 10,2–11,5 | 0 | >82 (945) | 89 |
| 15'/180°C | 55–75 | 177 | 100 | 8,9– 9,8 | 0 | 60 (691) | 90 |
| 20'/180°C | 60–80 | 172 | 111 | 10,1–11,0 | 0 | >82 (945) | 89 |
| 25'/180°C | 70–90 | 175 | 100 | 9,9–10,9 | 0 | >82 (945) | 92 |
| 20'/170°C | 80–95 | 171 | 91 | 8,7– 9,1 | 0 | 50 (576) | 91 |
| 25'/170°C | 70–90 | 178 | 100 | 9,4–10,8 | 0 | 70 (806) | 88 |
| 30'/170°C | 60–80 | 174 | 100 | 10,2–11,0 | 0 | >82 (945) | 90 |

## Beispiel 13

### Pigmentierter Lack

Nach den beschriebenen Verfahren wurde der Pulverlack mit folgender Rezeptur hergestellt, appliziert und zwischen 160° und 200°C eingebrannt.

602,2 Gew.-T. Polyester gemäß Beispiel B 5
177,8 Gew.-T. Uretdion-Isocyanat gemäß A 215
600,0 Gew.-T. Weißpigment ($TiO_2$)
75,0 Gew.-T. Verlaufmittel-Masterbatch
45,0 Gew.-T. Katalysator-Masterbatch

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 8'/200°C | 60– 70 | 170 | 91 | 8,7– 9,1 | 0 | 60 (691) | 91 |
| 10'/200°C | 50– 80 | 174 | 100 | 9,5–10,1 | 0 | 80 (922) | 88 |
| 15'/200°C | 70– 90 | 177 | 111 | 10,1–11,0 | 0 | >82 (945) | 90 |
| 15'/180°C | 65– 70 | 176 | 100 | 8,6– 9,1 | 0 | 50 (576) | 89 |
| 20'/180°C | 80 | 175 | 111 | 9,4–10,1 | 0 | >82 (945) | 93 |
| 25'/180°C | 85– 90 | 171 | 111 | 10,1–11,2 | 0 | 80 (922) | 91 |
| 20'/170°C | 70 | 173 | 100 | 8,1– 9,5 | 0 | 60 (691) | 90 |
| 25'/170°C | 60– 70 | 178 | 91 | 10–11,1 | 0 | >82 (945) | 89 |
| 30'/170°C | 80 | 174 | 111 | 9,7–10,5 | 0 | >82 (945) | 93 |
| 30'/160°C | 95–105 | 176 | 91 | 3,2– 4,5 | 0 | 30 (346) | 87 |
| 35'/160°C | 70– 90 | 179 | 100 | 6,1– 7,5 | 0 | 50 (576) | 91 |

## Beispiel 14

### Pigmentierter Lack

Nach den beschriebenen Verfahren wurde der Pulverlack mit folgender Rezeptur hergestellt, appliziert und zwischen 160° und 200°C eingebrannt.

624,2 Gew.-T. Polyester gemäß Beispiel B 3
155,8 Gew.-T. Uretdion-Isocyanat gemäß A 215
600,0 Gew.-T. Weißpigment ($TiO_2$)
75,0 Gew.-T. Verlaufmittel-Masterbatch
45,0 Gew.-T. Katalysator-Masterbatch

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 8'/200°C | 60– 80 | 175 | 91 | 8,9– 9,4 | 0 | 60 (691) | 88 |
| 10'/200°C | 80 | 171 | 111 | 9,7–10,1 | 0 | 80 (922) | 91 |
| 15'/200°C | 70– 90 | 179 | 100 | 10,0–11,5 | 0 | >82 (945) | 93 |
| 15'/180°C | 80–100 | 176 | 111 | 8,4– 8,9 | 0 | 50 (576) | 92 |
| 20'/180°C | 65– 85 | 179 | 100 | 10,1–10,7 | 0 | >82 (945) | 93 |
| 25'/180°C | 60– 70 | 178 | 111 | 9,6–10,1 | 0 | 80 (922) | 88 |
| 20'/170°C | 55– 90 | 180 | 91 | 8,0– 8,8 | 0 | 60 (691) | 90 |
| 25'/170°C | 70 | 175 | 100 | 9,7–10,4 | 0 | 70 (806) | 87 |
| 30'/170°C | 85–105 | 172 | 100 | 10,1–12 | 0 | >82 (945) | 92 |
| 30'/160°C | 90–110 | 174 | 100 | 3,1– 3,8 | 0 | 20 (230) | 92 |
| 35'/160°C | 70– 80 | 177 | 111 | 4,5– 6,5 | 0 | 50 (576) | 93 |

## Beispiel 15

### Pigmentierter Lack

Nach den beschriebenen Verfahren wurde der Pulverlack mit folgender Rezeptur hergestellt, appliziert und zwischen 160° und 200°C eingebrannt.

638,2 Gew.-T. Polyester gemäß Beispiel B 1
141,8 Gew.-T. Uretdion-Isocyanat gemäß A 22
600,0 Gew.-T. Weißpigment ($TiO_2$)
75,0 Gew.-T. Verlaufmittel-Masterbatch
45,0 Gew.-T. Katalysator-Masterbatch

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 8'/200°C | 80 | 178 | 91 | 8,7– 9,2 | 0 | 70 (806) | 85 |
| 10'/200°C | 70 | 172 | 100 | 10,2–10,4 | 0 | 80 (922) | 86 |

Fortsetzung

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 15'/200°C | 60–80 | 177 | 100 | 11,1–11,7 | 0 | >82 (945) | 83 |
| 15'/180°C | 55–85 | 176 | 100 | 8,2– 9,4 | 0 | 60 (691) | 86 |
| 20'/180°C | 70–90 | 171 | 111 | 9,4–10,1 | 0 | >82 (945) | 84 |
| 25'/180°C | 80 | 173 | 100 | 10,2–11,0 | 0 | >82 (945) | 87 |
| 20'/170°C | 60–80 | 179 | 111 | 8,0– 8,8 | 0 | 40 (461) | 84 |
| 25'/170°C | 70–90 | 180 | 100 | 10,1–10,5 | 0 | 70 (806) | 86 |
| 30'/170°C | 70–80 | 177 | 111 | 9,7–10,9 | 0 | >82 (945) | 87 |
| 30'/160°C | 80–85 | 174 | 91 | 2,1– 4,5 | 0 | 20 (230) | 86 |
| 35'/160°C | 70–80 | 176 | 100 | 4,7– 5,6 | 0 | 30 (346) | 85 |

## Beispiel 16

### Pigmentierter Lack

Nach den beschriebenen Verfahren wurde der Pulverlack mit folgender Rezeptur hergestellt, appliziert und zwischen 160° und 200°C eingebrannt.

643,6 Gew.-T. Polyester gemäß Beispiel B 3
136,4 Gew.-T. Uretdion-Isocyanat gemäß A 26
600,0 Gew.-T. Weißpigment ($TiO_2$)
75,0 Gew.-T. Verlaufmittel-Masterbatch
45,0 Gew.-T. Katalysator-Masterbatch

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 8'/200°C | 60–80 | 174 | 91 | 8,4– 8,8 | 0 | 50 (576) | 86 |
| 10'/200°C | 70–90 | 176 | 100 | 10,1–10,5 | 0 | 70 (806) | 88 |
| 15'/200°C | 80 | 170 | 91 | 9,7–11,5 | 0 | >82 (945) | 87 |
| 15'/180°C | 70 | 177 | 100 | 8,7– 8,9 | 0 | 60 (691) | 88 |
| 20'/180°C | 80 | 175 | 100 | 9,5–10,1 | 0 | 80 (922) | 91 |
| 25'/180°C | 55–85 | 179 | 100 | 10,6–11,0 | 0 | >82 (945) | 90 |
| 20'/170°C | 70 | 171 | 91 | 8,0– 8,3 | 0 | 50 (576) | 87 |
| 25'/170°C | 60–80 | 177 | 100 | 9,7–10,1 | 0 | >82 (945) | 89 |
| 30'/170°C | 70–95 | 175 | 111 | 9,4–11,0 | 0 | 80 (922) | 88 |

Fortsetzung

| Einbrenn- bedingungen | Mechanische Kenndaten | | | | | | |
|---|---|---|---|---|---|---|---|
| Zeit/Temp. | SD | HK | HB | ET | GS | Imp. rev. | GG 60° |
| 30'/160°C | 80 | 174 | 91 | 2,1– 3,6 | 0 | 20 (230) | 90 |
| 35'/160°C | 70 | 178 | 91 | 4,7– 5,1 | 0 | 30 (346) | 89 |

Die spritzfähigen, blockierungsmittelfreien Polyurethan-Pulver wiesen nach 7tägiger Lagerung bei 40°C eine sehr gute bis ausgezeichnete Rieselfähigkeit auf; nach 28tägiger Lagerung noch gute Rieselfähigkeit.

Die Lackfilme waren homogen und nadelstich- und blasenfrei. Die Oberfläche ist gut bis sehr gut verlaufen. Je nach Funktionalität des Polyesters und freien NCO-Gehalt des Uretdion-Adduktes ist schwacher bis leichter Orangenschaleneffekt zu beobachten.

Die einjährige Freibewitterung im Industrieklima führt zu keiner Veränderung der Flexibilität, Härte und Haftung. Die Prüfung im XENOTEST[R] 450 LF nach bis zu 3000 Stunden gemäß DIN 53 231 führte zu ausgezeichneten Ergebnissen. Glanz, Härte, Flexibilität erfuhren keine Veränderung.

**Patentansprüche**

1. Verfahren zur Herstellung von blockierungsmittelfreien Polyurethan-Pulverlacken mit hoher Lagerstabilität, die oberhalb 120°C härtbar sind, auf Basis von linearen, Uretdiongruppen aufweisenden Polyisocyanat-Additionsprodukten mit endständig unblockierten NCO-Gruppen und Polyolen, dadurcn gekennzeichnet, daß

a. lineare Uretdiongruppen aufweisende, endständig unblockierte Isophorondiisocyanat-Diol-Polyadditions-Produkte, deren Uretdiongruppen in der Hitze zu >98% in die entsprechenden Isocyanate rückspaltbar sind, der folgenden Formel

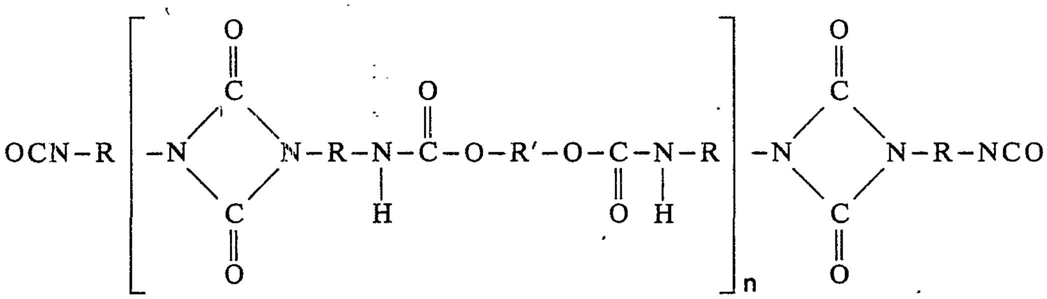

worin

R = 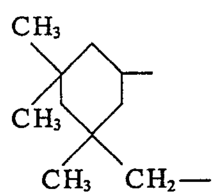 n ≧ 1 und

R' = zweiwertiger, aliphatischer, cycloaliphatischer, araliphatischer oder aromatischer Kohlenwasserstoffrest des Diols bedeuten,

mit einem NCO/OH-Verhältnis von 1 : 0,5 bis 1 : 0,9, insbesondere 1 : 0,6 bis 1 : 0,8, einem Uretdion/Diol-Molverhältnis 2 : 1 bis 6 : 5, vorzugsweise 3 : 2 bis 5 : 4, einem Gehalt an freiem Isocyanat bis 8 Gew.-% und vorzugsweise <5 Gew.-%, Molekulargewichten zwischen 500 und 4000, vorzugsweise zwischen 1450 und 2800 und Schmelzpunkten ≧70°C bis ≦130°C, vorzugsweise 85°C bis 120°C,

mit

b. Polyhydroxylverbindungen mit einer OH-Funktionalität von ≧2,2 bis ≦3,5, vorzugsweise 2,5 bis 3,4, einem mittleren Molekulargewicht von 2000—4500, vorzugsweise 2300—3900, einer OH-Zahl von 30 bis 100 mg KOH/g, vorzugsweise 40—80 mg KOH/g, einer Viskosität von <80 000 mPa · s, vorzugsweise <30 000 mPa · s bei 160°C und Schmelzpunkten zwischen ≧65°C und ≦120°C, vorzugsweise 75°C—100°C,

und mit

c. in der Polyurethanchemie üblichen Additiven umgesetzt werden, wobei das Mengenverhältnis von a. und b. so gewählt wird, daß das NCO/OH-Verhältnis zwischen 0,8 : 1 bis 1,2 : 1 liegt.

2. Blockierungsmittelfreie, oberhalb 120°C härtbare Polyurethan-Pulverlacke, hergestellt nach dem Verfahren gemäß Anspruch 1.

**Claims**

1. Process for the preparation of polyurethane powder coatings, which are free of blocking agents and have a high storage stability and which are curable above 120°C and are based on linear polyisocyanate addition products having uretdione groups and terminally unblocked NCO groups and on polyols, characterised in that

a. isophorone diisocyanate/diol polyaddition products which have linear uretdione groups and are terminally unblocked and the uretdione groups of which can redissociate when hot into the corresponding isocyanates to an extent of >98%, of the following formula

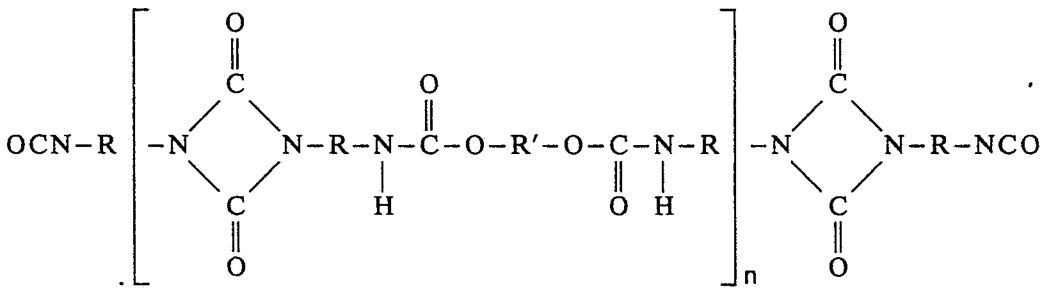

where

R = 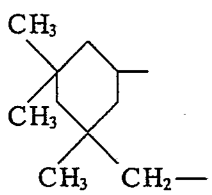 n ≧ 1 and

R' = a divalent, aliphatic, cycloaliphatic, araliphatic or aromatic hydrocarbon radical of the diol,

with an NCO/OH ratio of 1 : 0.5 to 1 : 0.9, in particular 1 : 0.6 to 1 : 0.8, a uretdione/diol molar ratio of 2 : 1 to 6 : 5, preferably 3 : 2 to 5 : 4, a free isocyanate content of up to 8% by weight and preferably <5% by weight, molecular weights between 500 and 4000, preferably between 1450 and 2800, and melting points of ≧70°C to ≦130°C, preferably 85°C to 120°C, are reacted with

b. polyhydroxy compounds having an OH functionality from ≧2.2 to ≦3.5, preferably 2.5 to 3.4, a mean molecular weight of 2000—4500, preferably 2300—3900, an OH number from 30 to 100 mg KOH/g, preferably 40—80 mg of KOH/g, a viscosity of <80,000 mPa · s, preferably <30,000 mPa · s, at 160°C and melting points between ≧65°C and ≦120°C, preferably 75°C—100°C, and with

c. additives conventional in polyurethane chemistry, the quantitative ratio of a. and b. being selected such that the NCO/OH ratio is between 0.8 : 1 and 1.2 : 1.

2. Polyurethane powder coatings, free of blocking agents and curable above 120°C, prepared by the process according to Claim 1.

**Revendications**

1. Procédé pour la fabrication de vernis en poudre constitués de polyuréthane ayant une grande stabilité au magasinage, exempts d'agents de blocage, qui sont durcissables au-dessus de 120°C, à base de produits d'addition de polyisocyanates comportant des groupes uretdione linéaires avec des groupes NCO sans blocage terminal et des polyols, procédé caractérisé en ce que l'on fait réagir:

a) des produits de poly-addition de diisocyanate d'isophorondiols, exempts de blocage terminal, comportant des groupes uretdione linéaires, dont les groupes uretdione peuvent être rescindés à la chaleur, à raison de plus de 98% en isocyanates correspondants, répondant à la formule suivante:

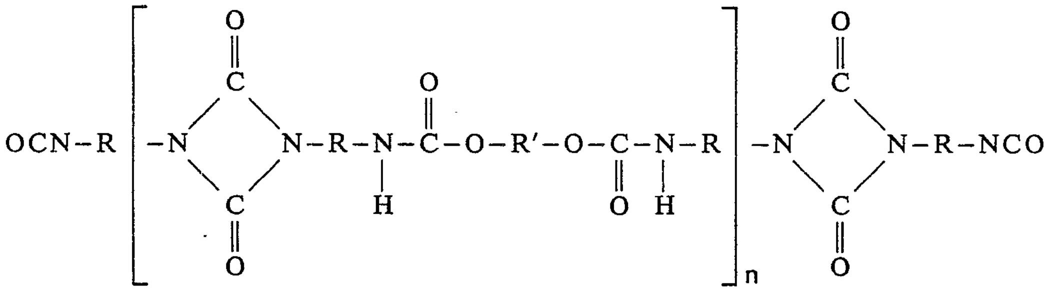

ou

R = 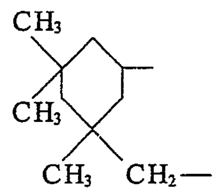 n ≧ 1 et

où R' représente un reste hydrocarbure, bivalent, aliphatique, cycloaliphatique, araliphatique ou aromatique du diol, avec un rapport NCO/OH de 1 : 0,5 à 1 : 0,9, notamment de 1 : 0,6 à 1 : 0,8, un rapport molaire uretdione/diol de 2 : 1 à 6 : 5, de préférence 3 : 2 à 5 : 4, une teneur en isocyanate libre pouvant aller jusqu'à 8% en poids et de préférence inférieure à 5% en poids, des poids moléculaires entre 500 et 4000, de préférence entre 1450 et 2800, et des points de fusion au moins égaux à 70°C et au plus égaux à 130°C, de préférence de 85 à 120°C,

b) des composés polyhydroxylés ayant une fonctionnalité OH de 2,2 au moins à au plus 3,5, de préférence de 2,5 à 3,4, d'un poids moléculaire de 2000 à 4500, de préférence 2300 à 3900, un indice d'OH de 30 à 100 mg KOH/g, de préférence 40 à 80 mg KOH/g, une viscosité inférieure à 80 000 mPa · s, de préférence inférieure à 30 000 mPa · s à 160°C, et des points de fusion pouvant aller d'au moins 65°C à au plus 120°C, de préférence 75°C à 100°C, et avec

c) les additifs courants dans la chimie du polyuréthane, le rapport en quantités entre a et b étant choisi tel que le rapport NCO/OH se situe entre 0,8 : 1 et 1,2 : 1.

2. Vernis en poudre constitués de polyuréthane durcissables au-dessus de 120°C, exempts d'agents de blocage fabriqués suivant le procédé de la revendication 1.